# EUROPÄISCHE PATENTSCHRIFT

(11) **EP 3 271 621 B1**
(45) Veröffentlichungstag und Bekanntmachung des Hinweises auf die Patenterteilung: **30.12.2020**
(21) Anmeldenummer: 16710404.1
(22) Anmeldetag: 02.03.2016
(51) Int. Cl.: F16J 15/00, B05B 3/02, F16L 27/08

(54) **DICHTUNGSEINRICHTUNG**
SEALING DEVICE
DISPOSITIF D'ÉTANCHÉITÉ

(30) Priorität: 18.03.2015 DE 102015104073
(43) Veröffentlichungstag der Anmeldung: 24.01.2018
(73) Patentinhaber: Hammelmann GmbH, 59302 Oelde (DE)
(72) Erfinder: NÖLLE, René, 59302 Oelde (DE); OBERSCHEIDT, Martin, 59320 Ennigerloh (DE); SCHUBRING, Gerald, 59302 Oelde (DE)
(74) Vertreter: Dantz, Jan Henning
(86) Internationale Anmeldenummer: PCT/EP2016/054417
(87) Internationale Veröffentlichungsnummer: WO 2016/146388

(56) Entgegenhaltungen:
- EP-A1- 2 083 200
- DE-A1- 10 316 730
- DE-A1- 19 951 317
- DE-U1- 9 216 438
- JP-A- H09 131 700
- JP-U- S49 120 953

## Beschreibung

Die Erfindung betrifft eine Dichtungseinrichtung nach dem Oberbegriff des Anspruchs 1.

Derartige Dichtungseinrichtungen finden insbesondere dort Verwendung, wo Aggregate mit hohen Fluiddrücken (200 - 4000 bar) betrieben werden.

Aufgrund der dabei herrschenden extremen Betriebsbedingungen kommen zur Abdichtung der relativ zueinander bewegbaren Bauteile, also entsprechend der Gattung zwischen einem zylindrischen Innenkörper und einer Außenhülse reibungsarme Spaltdichtungen zum Einsatz, die eine bevorzugt aus einem Buntmetall bestehende Zwischenbuchse aufweisen, die unter Spaltbildung zwischen einer Wandung einer Bohrung der Außenhülse und dem Innenkörper positioniert ist.

Dabei wird eine systembedingte Leckage in Kauf genommen, die allerdings zu einem erheblichen Energieverlust führt. So ergibt sich bei einem Fluiddruck von beispielsweise 2000 bar bei einer systemoptimierten, bekannten Dichtungseinrichtung eine Leckagemenge von etwa 600 ml/min und bei einem Fluiddruck von 3000 bar eine Leckagemenge von etwa 1200 ml/min. Dies steht jedoch einem in wirtschaftlicher Hinsicht optimierten Betrieb des Aggregats entgegen.

Hierzu zählt auch, dass eine hohe Leckage zu einem Erosionsverschleiß der beteiligten Bauteile führt, mit der Folge einer relativ geringen Standzeit und den sich daraus ergebenden Reparatur- und Stillstandskosten.

Dabei finden solche Dichtungseinrichtungen in Aggregaten Verwendung, bei denen die Relativbewegung der Innenhülse zur Außenhülse axial erfolgt oder rotierend.

Das rotierende Aggregat kann beispielsweise als ein Drehantrieb für ein hydraulisches Werkzeug ausgebildet sein. Bei einem elektrischen Antrieb des Drehantriebs ist die Außenhülse mit einem Rotor gekoppelt, der mit einem Stator in Wirkverbindung steht, während der demgegenüber fest stehende Innenkörper aus einer Hülse besteht, durch die das unter Hochdruck stehende Fluid geführt wird.

In der DE 103 16 730 A1, der DE 199 51 317 A1 sowie der JP H09 131700 A ist jeweils eine Dichtungsanordnung für Drehdurchführungen offenbart, die, entgegen der Gattung, zur Abdichtung berührende Dichtungsringe aufweisen.

Aus der EP 2 083 200 A1 ist eine Dichtungsanordnung für Drehdurchführungen bekannt, bei der eine Spaltdichtung zwischen dem Rotor und dem Stator zu Einsatz kommt. Am Stator ist eine perforierte Platte mit Durchgangsöffnungen angebracht, die einen Flüssigkeitsdurchgang zwischen der in der Spaltdichtung vorhandenen Druckflüssigkeit und einer durch Stege voneinander getrennte Kammern auf der dem Stator zugewandten Rückseite der Platte schaffen.

Aus der JP S49 120953 U ist eine weitere Dichtungsanordnung für Drehdurchführungen mit Spaltdichtung zwischen dem Rotor und dem Stator bekannt, bei der eine Vielzahl von ringförmigen Dichtkörpern zwischen dem Rotor und dem Stator eingesetzt sind, was dazu führt, dass diese auf Grund des stirnseitig anstehenden Hochdrucks axial unterschiedlich stark gegeneinander gedrückt werden und so der Druck in axialer Richtung von Dichtkörper zu Dichtkörper zunimmt.

Der Erfindung liegt die Aufgabe zugrunde, eine Dichtungseinrichtung der gattungsgemäßen Art so weiterzuentwickeln, dass ihre Dichtwirkung verbessert wird.

Diese Aufgabe wird durch eine Dichtungseinrichtung mit den Merkmalen des Anspruchs 1 gelöst.

Wie sich überraschend gezeigt hat, führt die Erfindung zu einer deutlichen Reduzierung der Leckagemenge, da, im Gegensatz zu einer Dichtungseinrichtung nach dem Stand der Technik, nahezu keine betriebsbedingte Aufweitung des Ringspaltes mehr möglich ist.

Dabei wird das unter hohem Druck stehende Fluid zwischen dem Innenkörper und der Zwischenbuchse, durch die den jeweiligen Kammern zugeordneten Durchgangsöffnungen den entsprechenden Kammern zugeführt, woraus sich ein Druckprofil in den Kammern ergibt, das stufenförmig dem Druckprofil des Ringspalts folgt. Durch diesen fast vollständigen Ausgleich zwischen Innen- und Außendruck wird eine Spaltaufweitung nahezu vollständig verhindert. Dabei kann durch die Anzahl der Kammern der Druckausgleich optimiert werden.

Über die Positionierung und Aufteilung der Kammern sowie der Durchgangsöffnungen kann eine Aufweitung des Spaltes zwischen der Zwischenbuchse und dem Innenkörper beeinflusst werden, wobei jeder Kammer zumindest eine Durchgangsöffnung-zugeordnet ist.

Anstelle eines Druckausgleichs durch das durchströmende Fluid, kann unter Verzicht auf die Durchgangsöffnungen der auf die Zwischenbuchse wirkende Außendruck durch eine insbesondere externePumpe aufgebracht werden, durch die ein Fluid mit dem entsprechenden Druck in die Kammern gebracht wird. Idealerweise entspricht dieser Außendruck dem Innendruck im Ringspalt zwischen dem Innenkörper und der Zwischenbuchse. Dabei kann der Außendruck durch eine entsprechende Pumpenregeleung an den zu ermittelnden Innendruck angepasst werden.

Während bislang, wie erwähnt, die Leckagemenge mit zunehmendem Fluiddruck überproportional zunahm, ist ein solcher überproportionaler Anstieg der Leckage in Abhängigkeit vom Betriebsdruck nun nicht mehr gegeben. D.h., der zulässige Betriebsdruck ist lediglich begrenzt durch die Bauteilfestigkeiten, so dass größere Nennweiten im Vergleich zu den bekannten Dichtungen möglich sind.

Im Vergleich zu der vorerwähnten Leckagemenge nach dem Stand der Technik, ergibt sich nun eine Leckagemenge bei einem Betriebsdruck von 2000 bar von etwa 90 ml/min und bei einem Betriebsdruck von 3000 bar etwa gleichviel, nämlich von etwa 92 ml/min.

Neben der deutlich verringerten Leckagemenge, die aufgrund des dadurch reduzierten Energieverlustes einen wesentlich verbesserten wirtschaftlichen Betrieb des Aggregats ermöglicht, ist durch die Erfindung auch eine bemerkenswerte Erhöhung der Standzeit der Dichtungseinrichtung gegeben, die ursächlich auf die verringerte Belastung und den sich dadurch ergebenden geringeren Verschleiß der beteiligten Bauteile zurückzuführen ist.

Wie Versuche gezeigt haben, erhöht sich die Leckagemenge bei einer Dichtungseinrichtung nach dem Stand der Technik und einem Betriebsdruck von 2500 bar nach etwa 125 Stunden auf 1600 ml/min, während bei einem höheren Betriebsdruck von 2.800 bar und gleicher Laufzeit der neuen Dichtungseinrichtung die Leckage etwa 150 ml/min beträgt, also lediglich etwa 9 %.

Alles in allem bietet die Erfindung eine deutliche Verbesserung hinsichtlich eines wirtschaftlichen Betriebs eines mit einer Dichteinrichtung versehenen Aggregats.

Diese ergibt sich zum einen aus dem erwähnten geringeren Energieverlust und zum anderen aus der längeren Standzeit, da die beteiligten Bauteile deutlich später ersetzt werden müssen als bisher. Gerade bei einer Verwendung der Dichtungseinrichtung in einem elektrischen Drehantrieb ist dies besonders vorteilhaft, da dabei die Demontage- bzw. Montagearbeiten aufwendig und damit kostenintensiv sind.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Dichtungseinrichtung nach dem Stand der Technik in einem Längsschnitt
- Figur 2: einen mit einer erfindungsgemäßen Dichtungseinrichtung versehener Drehantrieb in einem Längsschnitt
- Figur 3: eine Einzelheit des Drehantriebs, gleichfalls in einem Längsschnitt
- Figur 4: eine vergrößerte Darstellung eines Ausschnitts der Einzelheit nach Figur 3 als Längsschnitt
- Figur 5: eine weiter vergrößerte Darstellung des Ausschnitts nach Figur 4
- Figur 6: ein weiteres Ausführungsbeispiel der Erfindung, gleichfalls in einem Längsschnitt.

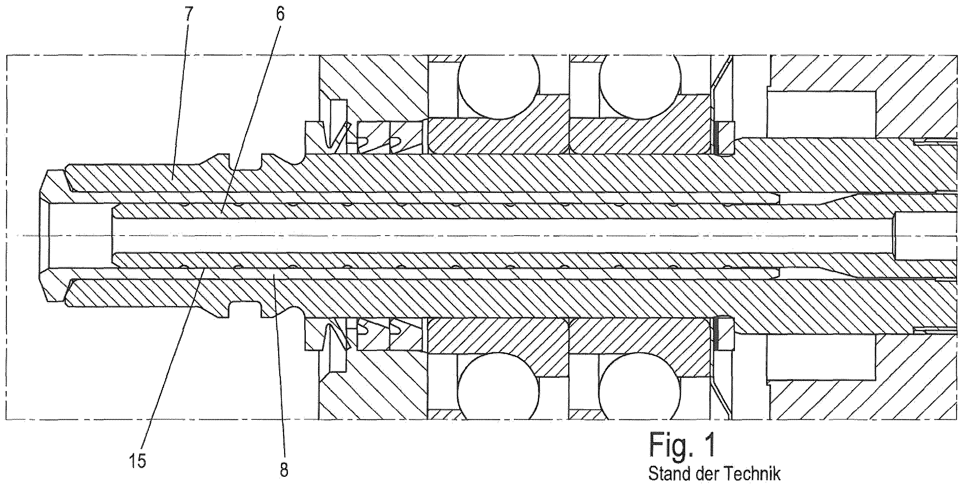

In der Figur 1 ist eine Dichtungseinrichtung nach dem Stand der Technik (siehe z.B. DE 92 16 438U) abgebildet, mit einem als Hülse ausgebildeten Innenkörper 6, einer diesen umhüllenden Zwischenbuchse 8, die in einer Außenhülse 7 unter Bildung einer Spaltdichtung gelagert ist, wobei zwischen dem Innenkörper 6 und der Zwischenbuchse 8 ein Ringspalt 15 gebildet ist. Bei dieser Konstruktion bewirkt der Druck des abzudichtenden Fluids eine Aufweitung der Zwischenhülse, was zur erhöhten Leckage führt.

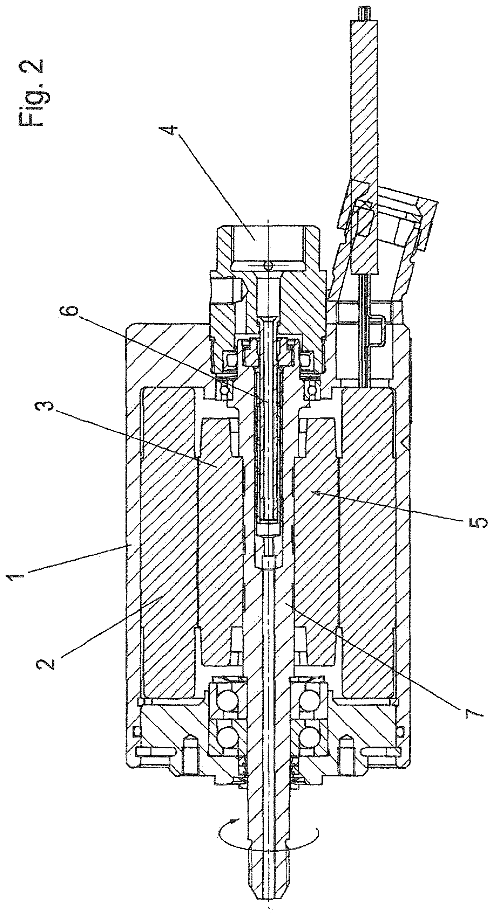

In der Figur 2 ist ein elektrischer Drehantrieb für ein hydraulisches Werkzeug dargestellt, mit einem Gehäuse 1, einem darin verdrehfest gelagerten Stator 2 sowie einem Rotor 3, in dem verdrehsicher die Außenhülse 7 gehalten ist, durch die ein unter Hochdruck (> 2000 bar) stehendes Fluid führbar ist, das über einen Fluidanschluss 4 zuführbar ist.

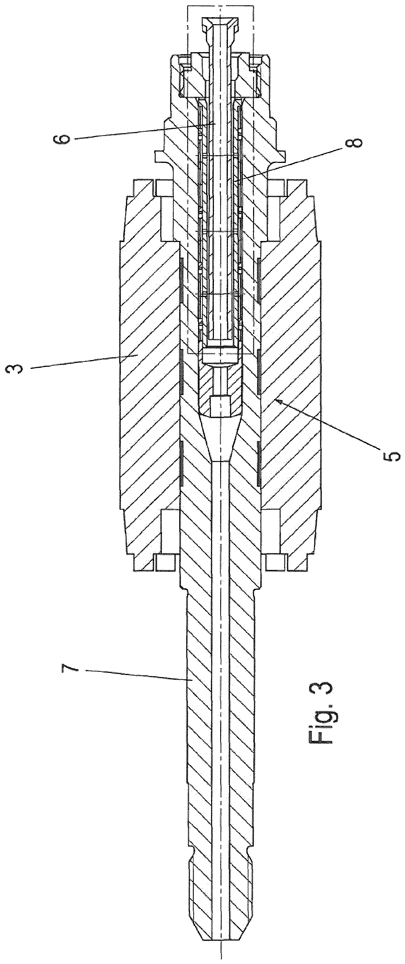

Die Außenhülse 7 ist Bestandteil der Dichtungseinrichtung 5 nach der Erfindung, die in den Figuren 3-6 in vergrößerter Ansicht deutlicher erkennbar ist.

Achsgleich zur Außenhülse 7 ist als weiterer Bestandteil der Dichtungseinrichtung 5 der in der Außenhülse 7 gelagerte Innenkörper 6 angeordnet, der relativ zur Außenhülse 7 bewegbar ist. D.h., im Beispiel ist der als axial durchgängig offene Hülse ausgebildete Innenkörper 6 verdrehsicher mit dem Fluidanschluss 4 und damit mit dem Gehäuse 1 verbunden, während die Außenhülse 7 dazu verdrehbar ist.

Zwischen der Außenhülse 7 und dem Innenkörper 6 ist die Zwischenbuchse 8 angeordnet, unter Bildung einer Spaltdichtung, wobei die Zwischenbuchse 8 bevorzugt aus einem rostfreien Stahl besteht oder einem anderen geeigneten Material, z. B. Keramik oder dergleichen.

Gemäß der Erfindung sind zwischen der Zwischenbuchse 8 und der Außenhülse Kammern 9 ausgebildet, die seitlich durch Dichtungen 11 begrenzt sind, wobei eine Dichtung 11 aus einem Dichtring 13, beispielsweise einem O-Ring besteht, der von einem Halter 12 gehalten ist.

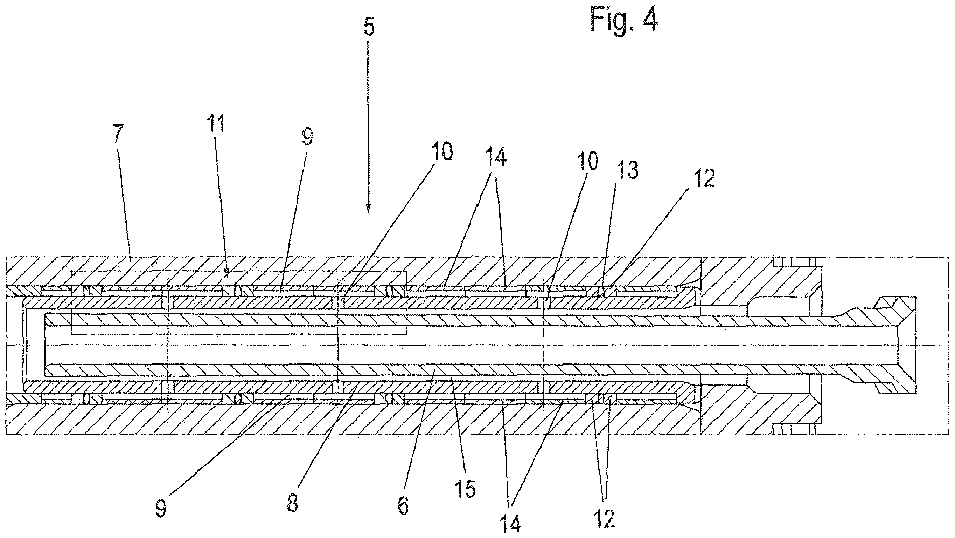

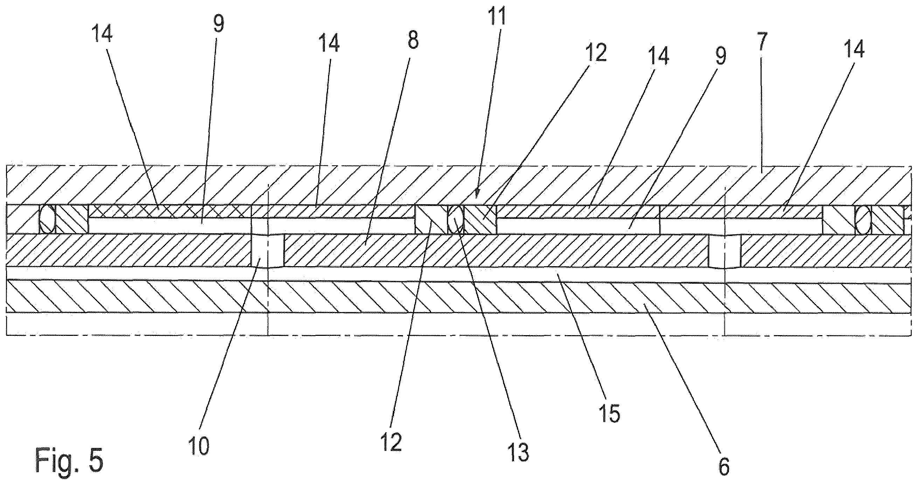

Weiter weist die Zwischenbuchse 8 radial oder schräg ausgerichtete Durchgangsöffnungen 10 auf, die, ausgehend von einem gebildeten Ringspalt 15 zwischen dem Innenkörper 6 und der Zwischenbuchse 8 in eine der Kammern 10 mündet. Dies ist besonders deutlich in den Figuren 4 und 5 zu erkennen.

Zur Ausbildung der Kammern sind bei dem in den Figuren 3-5 gezeigten Beispiel Ringe 14 vorgesehen, die an der Wandung der Außenhülse 7 anliegen und so bemessen sind, dass ihr lichter Durchmesser größer ist als der Außendurchmesser der Zwischenbuchse 8, so dass sich die Kammern 9 zwischen den Ringen 14 und der Zwischenbuchse 8 ausbilden. Dabei liegt die jeweilige Dichtung 11 sowohl an der Wandung der Außenhülse 7 wie auch an der Zwischenbuchse 8 an.

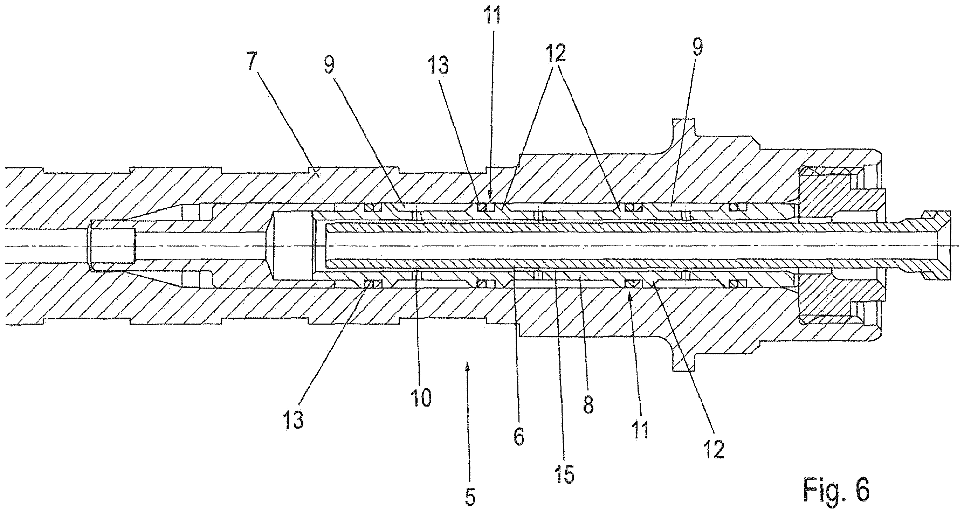

Eine weitere Variante zur Ausbildung der Kammern 9 ist in der Figur 6 abgebildet. Unter Verzicht auf die Ringe-14 ist die Zwischenbuchse 8 mit nutartigen Einstichen versehen, durch die die Kammern 9 im Zusammenwirken mit der Wandung der Außenhülse 7 gebildet sind. Dabei stellen sich die Halter 12 der Dichtungen 11 als einstückig mit der Zwischenbuchse 8 dar, die an der Innenwand der Außenhülse 7 anliegen.

Im Beispiel sind die Kammern umfänglich geführt, d.h., sie bilden einen Ringraum. Denkbar ist jedoch auch, in Umfangsrichtung jeweils mehrere Kammern 9 vorzusehen, wobei in jedem Fall mindestens eine Durchgangsöffnung 10 in die jeweilige Kammer 9 mündet.

Anstelle einer rotierenden Relativbewegung zwischen der Außenhülse 7 und dem Innenkörper 6, wie sie für den im Beispiel gezeigten Drehantrieb gegeben ist, kann die Relativbewegung auch axial erfolgen, wobei dann der Innenkörper 6 auch aus einem Vollmaterial, beispielsweise einer Welle oder Stange gebildet sein kann.

Selbstverständlich ist die Erfindung sowohl bei einer axial oder rotierend bewegbaren Außenhülse 7 und einem fest stehenden Innenkörper 6 wie auch bei einem axial oder rotierend bewegbaren Innenkörper 6 und einer dazu fest stehenden Außenhülse 7 realisierbar.

### Bezugszeichenliste

- 1: Gehäuse
- 2: Stator
- 3: Rotor
- 4: Fluidanschluss
- 5: Dichtungseinrichtung
- 6: Innenkörper
- 7: Außenhülse
- 8: Zwischenbuchse
- 9: Kammer
- 10: Durchgangsöffnung
- 11: Dichtung
- 12: Halter
- 13: Dichtring
- 14: Ringsegment
- 15: Ringspalt

## Patentansprüche

1. Dichtungseinrichtung, mit einer Zwischenbuchse (8), die unter Bildung einer Spaltdichtung zwischen einer Außenhülse (7) und einem darin relativ dazu bewegbar gelagerten Innenkörper (6) angeordnet ist, **dadurch gekennzeichnet, dass** zwischen der Zwischenbuchse (8) und der angrenzenden Außenhülse (7) mit einem Druckfluid befüllbare, durch Dichtungen (11) seitlich begrenzte Kammern (9) vorgesehen sind, wobei jede der Dichtungen aus einem in einem Halter (12) gehaltenen Dichtring (13) besteht, der sich einerseits an der Innenwand der Außenhülse (7) und andererseits an der Zwischenbuchse (8) abstützt.

2. Dichtungseinrichtung nach Anspruch 1, **dadurch gekennzeichnet, dass** die Zwischenbuchse (8) vorzugsweise radial ausgerichtete, in die Kammern (9) mündende Durchgangsöffnungen (10) aufweist.

3. Dichtungseinrichtung nach einem der vorhergehenden Ansprüche, **dadurch gekennzeichnet, dass** jeder Kammer (9) mindestens eine Durchgangsöffnung (10) zugeordnet ist.

4. Dichtungseinrichtung nach einem der vorhergehenden Ansprüche, **dadurch gekennzeichnet, dass** jede Kammer (9) als umfänglicher Ringraum ausgebildet ist.

5. Dichtungseinrichtung nach einem der vorhergehenden Ansprüche, **dadurch gekennzeichnet, dass** mehrere, umfänglich verteilte Kammern (9) vorgesehen sind.

6. Dichtungseinrichtung nach einem der vorhergehenden Ansprüche, **dadurch gekennzeichnet, dass** die Außenhülse (7) zum Innenkörper (6) verdrehbar oder axial verschiebbar ist.

7. Dichtungseinrichtung nach einem der vorhergehenden Ansprüche, **dadurch gekennzeichnet, dass** zur Ausbildung der Kammern (9) Ringe (14) vorgesehen sind, die an der Innenwandung der Außenhülse (7) anliegen.

8. Dichtungseinrichtung nach einem der vorhergehenden Ansprüche, **dadurch gekennzeichnet, dass** zur Bildung der Kammern (9) die Zwischenbuchse (8) nutartige Einstiche aufweist, die in axialer Richtung der Zwischenbuchse (8) durch die angeformten Halter (12) begrenzt sind.

9. Dichtungseinrichtung nach einem der vorhergehenden Ansprüche, **dadurch gekennzeichnet, dass** die Kammern (9) mit einer Pumpe verbunden sind, mit der ein Fluid unter Druck zuführbar ist.

## Claims

1. A sealing device, comprising an intermediate bushing (8), which by forming a gap seal is arranged between an outer sleeve (7) and an inner body (6) which is mounted to be movable therein relative thereto, **characterized in that** chambers (9) which can be filled with a pressurized liquid are provided between the intermediate bushing (8) and the adjacent outer sleeve (7), said chambers (9) being laterally delimited by sealing elements (11), whereby the seal (11) comprises a sealing ring (13), which on the one hand is supported on the inner wall of the outer sleeve (7) and on the other hand on the intermediate bushing (8), whereby the sealing ring (13) is held in a holder (12).

2. A sealing device according to claim 1, **characterized in that** the intermediate bushing (8) preferably comprises radially oriented through-openings (10) which open into the chambers (9).

3. A sealing device according to one of the preceding claims, **characterized in that** each chamber (9) is assigned at least one through-opening (10).

4. A sealing device according to one of the preceding claims, **characterized in that** each chamber (9) is designed as a circumferential annular space.

5. A sealing device according to one of the preceding claims, **characterized in that** several chambers (9) are provided which are distributed over the circumference.

6. A sealing device according to one of the preceding claims, **characterized in that** the outer sleeve (7) is rotatable or axially displaceable relative to the inner body (6).

7. A sealing device according to one of the preceding claims, **characterized in that** rings (14) which rest against the inner wall of the outer sleeve (7) are provided for the formation of the chambers (9).

8. A sealing device according to one of the preceding claims, **characterized in that** the intermediate bushing (8) has groove-like indentations for the formation of the chambers (9), which indentations are delimited in the axial direction of the intermediate bushing (8) by the integrally formed holders (12).

9. A sealing device according to one of the preceding claims, **characterized in that** the chambers (9) are connected to a pump, by means of which a pressurized fluid can be supplied.

## Revendications

1. Dispositif d'étanchéité, avec une douille intermédiaire (8), qui est disposée entre un manchon extérieur (7) et un corps intérieur (6) monté dans celui-ci de manière mobile par rapport à celui-ci, en formant un joint labyrinthe, **caractérisé en ce qu'**entre la douille intermédiaire (8) et le manchon extérieur (7) adjacent sont prévues des chambres (9) pouvant être remplies d'un fluide sous pression et délimitées latéralement par des joints (11), chacun des joints étant constitué d'une bague d'étanchéité (13) maintenue dans un support (12) et prenant appui d'une part sur la paroi intérieure du manchon extérieur (7) et d'autre part sur la douille intermédiaire (8).

2. Dispositif d'étanchéité selon la revendication 1, **caractérisé en ce que** la douille intermédiaire (8) présente des ouvertures de passage (10), de préférence orientées radialement, qui débouchent dans les chambres (9).

3. Dispositif d'étanchéité selon l'une des revendications précédentes, **caractérisé en ce qu'**au moins une ouverture de passage (10) est associée à chaque chambre (9).

4. Dispositif d'étanchéité selon l'une des revendications précédentes, **caractérisé en ce que** chaque chambre (9) est conçue comme un espace annulaire circonférentiel.

5. Dispositif d'étanchéité selon l'une des revendications précédentes, **caractérisé en ce que** plusieurs chambres (9) réparties sur la circonférence sont prévues.

6. Dispositif d'étanchéité selon l'une des revendications précédentes, **caractérisé en ce que** le manchon extérieur (7) peut tourner ou se déplacer axialement par rapport au corps intérieur (6).

7. Dispositif d'étanchéité selon l'une des revendications précédentes, **caractérisé en ce que** des bagues (14) qui s'appuient contre la paroi intérieure du manchon extérieur (7) sont prévues pour former les chambres (9).

8. Dispositif d'étanchéité selon l'une des revendications précédentes, **caractérisé en ce que** pour former les chambres (9), la douille intermédiaire (8) présente des entailles en forme de rainure qui sont délimitées dans la direction axiale de la douille intermédiaire (8) par les supports (12) formés sur elle.

9. Dispositif d'étanchéité selon l'une des revendications précédentes, **caractérisé en ce que** les chambres (9) sont reliées à une pompe au moyen de laquelle un fluide peut être amené sous pression.
